(19) Europäisches Patentamt
European Patent Office
Office européen des brevets

(11) **EP 4 194 830 B1**

(12) **EUROPÄISCHE PATENTSCHRIFT**

(45) Veröffentlichungstag und Bekanntmachung des Hinweises auf die Patenterteilung:
**08.05.2024 Patentblatt 2024/19**

(21) Anmeldenummer: **22212410.9**

(22) Anmeldetag: **09.12.2022**

(51) Internationale Patentklassifikation (IPC):
**G01L 1/25** (2006.01)    **G01L 1/14** (2006.01)
**G01L 1/20** (2006.01)    **G01L 1/22** (2006.01)

(52) Gemeinsame Patentklassifikation (CPC):
**G01L 1/25; G01L 1/144; G01L 1/148; G01L 1/20; G01L 1/22**

(54) **RESISTIVER UND KAPAZITIVER KRAFTSENSOR UND VERFAHREN ZUM BETRIEB DESSELBEN**

RESISTIVE AND CAPACITIVE FORCE SENSOR AND METHOD FOR OPERATING THE SAME

CAPTEUR DE FORCE RÉSISTIF ET CAPACITIF ET PROCÉDÉ DE FONCTIONNEMENT DE CELUI-CI

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.12.2021 DE 102021132509**

(43) Veröffentlichungstag der Anmeldung:
**14.06.2023 Patentblatt 2023/24**

(73) Patentinhaber: **Tacterion GmbH**
**80335 München (DE)**

(72) Erfinder:
• **Abdellah, Alaa**
  **81476 München (DE)**
• **Strohmayr, Michael Wolfgang**
  **86159 Augsburg (DE)**
• **Sgueglia, Marco**
  **81539 München (DE)**

(74) Vertreter: **Rösler Rasch van der Heide & Partner**
**Bodenseestraße 18**
**81241 München (DE)**

(56) Entgegenhaltungen:
**DE-A1-102015 111 425    US-A1- 2017 261 388**

EP 4 194 830 B1

**Beschreibung**

Die Erfindung betrifft einen resistiven und kapazitiven Kraftsensor und ein Verfahren zum Betrieb desselben. Unter einem "resistiven und kapazitiven Kraftsensor" wird vorliegend insbesondere ein Kraftsensor verstanden, der zur gleichzeitigen Erfassung einer Veränderung eines elektrischen Widerstands sowie einer elektrischen Kapazität ausgeführt und eingerichtet ist. Insbesondere wird darunter ein einziger/einzelner Sensor verstanden, der zur gleichzeitigen Erfassung einer Veränderung eines elektrischen Widerstands sowie einer elektrischen Kapazität ausgeführt und eingerichtet ist, d.h. also keine Kombination aus einem resistiven Kraftsensor und einem weiteren kapazitiven Kraftsensor.

Aus dem Dokument DE 10 2015 111 425 A1 ist eine Einrichtung zum elektrischen Messen einer Kraft F bekannt, die mindestens zwischen zwei zusammengepressten Metallelektroden wirkt, wobei die Metallelektroden aus Hartmetall einer mittleren Rautiefe Ra kleiner gleich 400 Nanometer eine kraftunabhängige Leitfähigkeit an den Kontaktflächen besitzen, und die Kraft direkt auf die Isolationsdünnschicht bzw. Mehrlagenisolationsdünnschicht wirkt, ohne nennenswerte Verformung der mechanischen Elemente zu bewirken. Über eine elektrische Messbrücke wird eine stetige, hochauflösende und exakt beschreibbare und wiederholbare Funktion zur einwirkenden Kraft unabhängig von der Umgebungstemperatur ermittelt. Die nachgewiesene termperaturkompensierte Brückenspannung U, die über der Messbrücke bei gegebenem Strom abfällt, wird direkt einer Signalaufbereitungs- und -auswerteeinheit zugeführt, so dass in miniaturisierter und kompakter Bauweise elektrisch entkoppelte und mechanisch robust gestaltete Kraftmesssensoren sehr wirtschaftlich herstellbar sind.

Aus dem Dokument US 2017/0261388 A1 ist ein Sensor bekannt, der Folgendes umfasst: ein Substrat mit einer ersten Elektrode und einer zweiten Elektrode, wobei die erste Elektrode und die zweite Elektrode durch einen isolierenden Spalt voneinander getrennt sind; und ein nachgiebiges Gewebematerial mit mehreren leitenden Bahnen, das über dem Spalt angeordnet ist und die erste Elektrode und die zweite Elektrode berührt, so dass sich der Widerstand eines elektrischen Pfades, der durch das nachgiebige Gewebematerial zwischen der ersten Elektrode und der zweiten Elektrode verläuft, als Reaktion auf eine Kraft des nachgiebigen Gewebematerials gegen eine oder mehrere der ersten Elektrode und der zweiten Elektrode ändert.

Die Aufgabe der Erfindung ist es, einen resistiven und kapazitiven Kraftsensor - d.h. einen hybriden Kraftsensor - sowie ein Verfahren zu dessen Betrieb anzugeben, wobei der Kraftsensor insbesondere eine geringe Messwert-Drift aufweist und somit eine genauere, stabilere und damit verbesserte Erfassung einer auf den Sensor wirkenden externen Kraft ermöglicht.

Der grundsätzliche Aufbau von resistiven und kapazitiven Kraftsensoren wird vorausgesetzt. Hierzu sei auf den bekannten Stand der Technik verwiesen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Der Erfindung liegt die Erkenntnis zugrunde, dass sowohl kapazitive Kraftsensoren als auch resistive Kraftsensoren bei Einwirkung einer konstanten externen Kraft auf den Kraftsensor über einen Messzeitraum von beispielsweise 1 min bis 500 min eine Drift der Messwerte aufweisen. Dabei ist das Drift-Verhalten von kapazitiven und resistiven Kraftsensoren unterschiedlich.

Auswertungen von Messreihen mit hybriden Kraftsensoren, d.h. an resistiven und kapazitiven Kraftsensoren mit zumindest einer ersten Elektrode E1 und einer zweiten Elektrode E2 und einer gleichzeitigten Erfassung von Widerstands- und Kapazitätsänderungen an den Elektroden E1 und E2 haben gezeigt, dass diese Messwert-Drift durch Verrechnung von Widerstands-Messwerten bzw. von Kapazitäts-Messwerten erheblich reduziert werden kann.

Anmerkung: Es wird im gesamten Dokument unterstellt, dass mit "externen auf das Sensorelement/den Kraftsensor wirkenden Kräften", jeweils mechanische Kräfte gemeint sind, die über einen direkten mechanischen Kontakt auf den Kraftsensor/das Sensorelement einwirken. Andere Kräfte, insbesondere die Gravitationskraft, elektrische Kräfte, magnetische Kräfte etc. sind hiermit also nicht gemeint.

Die vorstehende Aufgabe ist mit einem resistiven und kapazitiven Kraftsensor gelöst, der zumindest ein Sensorelement mit zumindest einer ersten Elektrode E1 und einer zweiten Elektrode E2 aufweist, wobei das Sensorelement derart ausgeführt ist, dass sich bei Aufbringen einer externen Kraft $F$ abhängig von dem Betrag $|F|$ der Kraft $F$ die elektrische Eigenkapazität $C$ der Elektroden E1 und/oder E2 und der elektrische Widerstand $R$ zwischen der ersten Elektrode E1 und einer zweiten Elektrode E2 (kraftabhängig) ändert.

Weiterhin weist der vorgeschlagene Kraftsensor eine erste Messeinheit auf, die mit der ersten Elektrode E1 und der zweiten Elektrode E2 elektrisch verbunden ist, und die zur Ermittlung der elektrischen Eigenkapazität $C(t)$ der Elektrode E2 ausgeführt und eingerichtet ist, sowie eine zweite Messeinheit, die mit der ersten Elektrode E1 und der zweiten Elektrode E2 elektrisch verbunden ist, und die zur Ermittlung des elektrischen Widerstandes $R(t)$ zwischen der ersten Elektrode E1 und einer zweiten Elektrode E2 ausgeführt und eingerichtet ist.

Weiterhin weist der vorgeschlagene Kraftsensor eine Auswerteeinheit auf, die dazu ausgeführt und eingerichtet ist, den Betrag |F(t)| einer extern auf das Sensorelement aufgebrachten Kraft F(t) abhängig von einem Mittelwert (mean(C[t - Δt, t]) der ermittelten zeitabhängigen Eigenkapazität C(t) in einem Zeitintervall [t-Δt, t] und abhängig von einem Mittelwert mean(R[t -Δt, t]) des ermittelten zeitabhängigen Widerstands R(t) im Zeitintervall [t-Δt, t] zu ermitteln:

$$(1) \qquad |F(t)| = |F(mean(C[t - \Delta t, t], mean(R[t - \Delta t, t]))|$$

mit Δt: Zeitspanne und t: Zeit.

Schließlich weist der vorgeschlagene Kraftsensor eine Ausgabeeinheit zur Ausgabe und/oder Anzeige des ermittelten Kraftbetrages |F(t)| auf.

In einer vorteilhaften Weiterbildung wird der Betrag |F(t)| der externen Kraft F(t) von der Auswerteeinheit wie folgt ermittelt:

$$(2) \qquad |F(t)| = C_{OFFSET} - (mean(C[t - \Delta t:t]) - m \cdot mean(R[t - \Delta t:t]))$$

mit:

| | |
|---|---|
| $C_{OFFSET}$: | erste Kalibrierungskonstante |
| mean(C[t - Δt, t]) | Mittelwert der zeitabhängigen Eigenkapazität C(t) im Zeitintervall [t-Δt, t] |
| mean(R[t -Δt, t]) | Mittelwert des zeitabhängigen Widerstands R(t) im Zeitintervall [t-Δt, t] |
| m: | zweite Kalibrierungskonstante |

Somit wird der Betrag |F(t)| der externen Kraft F(t) vorteilhaft basierend auf einem linearen Zusammenhang von R(t) bzw. mean(R[t -Δt, t]) und C(t) bzw. mean(C[t - Δt, t] ermittelt.

In einem Ausführungsbeispiel werden die Mittelwerte: mean(C[t - Δt, t]) und mean(R[t -Δt, t]) von der Auswerteeinheit jeweils als arithmetische Mittelwerte bestimmt. Natürlich können zur Ermittlung der "Mittelwerte" auch andere Berechnungsmethoden (statistischer Mittelwert, geometrischer Mittelwert, harmonischer Mittelwert, gewichteter Mittelwert, etc) verwendet werden.

Natürlich sind vom Erfindungsgedanken auch Approximationsverfahren höheren Grades für |F(t)| eingeschlossen. Wesentliche Erkenntnis ist aber, dass der vorstehend unterstellte lineare Zusammenhang (Approximation 1. Ordnung) bereits für viele Anwendungen hinreichend exakt ist, um die Messwertedrift zu kompensieren und zu erheblich exakteren Messergebnissen für F(t) zu gelangen. Weiterhin sind Echtzeitanwendungen durch einen geringen Rechenaufwand insbesondere für eine lineare Approximation möglich.

Höhergradige (bspw. 2. Ordnung, 3. Ordnung etc.) Approximationen für R(t) und/oder C(t) bzw. für den Zusammenhang zwischen F(t) und R(t) und C(t) können bei Bedarf als weitere Terme dem linearen Ansatz nach Gleichung (2) hinzugefügt werden, analog einer Taylorreihenentwicklung. Dabei ist es mathematisch äquivalent höhergradige Approximationsterme zu Gleichung (2) hinzuzufügen oder eine analytische Gleichung für die jeweilige höhergradige Approximation explizit anzugeben.

Zur Ermittlung der elektrischen Eigenkapazität C(t) der Elektrode E2 nutzt die erste Messeinheit vorteilhaft ein Ladungs-Transfer-Acquisitions-Verfahren (engl: "charge transfer acquisition") wie bspw. beschrieben im Dokument: "STM32L4 - TSC, Touch Sensing Controller, ST life.augmented, Revision 3.2.; https://www.st.com/content/ccc/resource/training/technical/product_training/6b/ea/47/06/1 8/83/43/67/STM32L4_Peripheral Touchsense.pdf/files/STM32L4 Peripheral Touchsense .pdf/jcr:content/translations/en.STM32L4_Peripheral_Touchsense.pdf.

In einem vorteilhaften Ausführungsbeispiel ist das zumindest eine Sensorelement ein piezoresistiver Kraftsensor.

In einem vorteilhaften Ausführungsbeispiel weist das Sensorelement auf: eine Substratschicht aus einem elektrisch nichtleitenden Material M1, eine auf einer Oberseite der Substratschicht aufgebrachte erste Elektrodenschicht ES1 als erste Elektrode E1 und eine auf der Oberseite der Substratschicht aufgebrachte zweite Elektrodenschicht ES2 als Elektrode E2. Die erste Elektrode E1 und die zweite Elektrode E2 sind jeweils kammartig ausgebildet und so auf der Oberseite der Substratschicht angeordnet, dass sie kammartig ineinandergreifen ohne sich elektrisch zu kontaktieren. Über der Oberseite mit den darauf aufgebrachten Elektrodenschichten ist eine im unbelasteten Zustand (d.h. bei keinem Eintrag einer externen Kraft) von den Elektroden beabstandete weitere elektrisch leitende elastische Schicht ES0 vorhanden. Bei Aufbringen einer externen Kraft auf das Sensorelement wird diese Schicht ES0 in Richtung Elektrodenschichten gebogen und führt zu einer Kontaktierung der Elektrodenschichten ES1 und ES2 durch ES0 und somit zu einem elektrischen Kontakt zwischen ES1 und ES2.

In einem weiteren vorteilhaften Ausführungsbeispiel weist das Sensorelement auf: eine Substratschicht aus einem elektrisch nichtleitenden Material M1, eine auf einer Oberseite der Substratschicht aufgebrachte erste Elektrodenschicht ES1 als erste Elektrode E1 und eine auf die Oberseite der Substratschicht aufgebrachte zweite Elektrodenschicht ES2 als Elektrode E2, wobei die erste und die zweite Elektrodenschicht ES1, ES2 aus einem elektrisch leitenden Material M2 bestehen, auf der Oberseite lateral voneinander beabstandet angeordnet sind und jeweils eine 2D-Form aufweisen, die derart gestaltet ist, dass sich Teilbereiche der Elektrodenschicht ES1 und Teilbereiche der Elektrodenschicht ES2 zumindest in einem Bereich B an der Oberseite entlang einer Richtung R0 aufeinanderfolgend mehrfach abwechseln, eine auf die Substratschicht in Zwischenräumen zwischen den Elektrodenschichten ES1 und ES2 und diese im Ruhezustand überragend und/oder jeweils auf die Elektrodenschichten ES1 und ES2 vereinzelt aufgebrachte Abstandshalter aus einem im Wesentlichen elektrisch nichtleitenden Material M3, und eine auf die Abstandshalterschicht aufgebrachte Messschicht aus einem elektrisch leitenden, elastischen und dehnbaren Material M4.

In einem weiteren vorteilhaften Ausführungsbeispiel weist das Sensorelement auf: eine Substratschicht aus einem elektrisch nichtleitenden Material M1, eine auf einer Oberseite der Substratschicht aufgebrachte erste Elektrodenschicht ES1 als erste Elektrode E1 und eine auf die Oberseite der Substratschicht aufgebrachte zweite Elektrodenschicht ES2 als Elektrode E2, wobei die erste und die zweite Elektrodenschicht ES1, ES2 aus einem elektrisch leitenden Material M2 bestehen, auf der Oberseite lateral voneinander beabstandet angeordnet sind und jeweils eine 2D-Form aufweisen, die derart gestaltet ist, dass sich Teilbereiche der Elektrodenschicht ES1 und Teilbereiche der Elektrodenschicht ES2 zumindest in einem Bereich B an der Oberseite entlang einer Richtung R0 aufeinanderfolgend mehrfach abwechseln, eine auf die Substratschicht mit den darauf aufgebrachten Elektrodenschichten ES1 und ES2 aufgebrachte Abstandshalterschicht, wobei die Abstandshalterschicht zumindest in dem Bereich B aus einzelnen in einer Richtung R1 verlaufenden, jeweils voneinander beabstandeten Strängen ST aus einem im Wesentlichen elektrisch nichtleitenden Material M3 besteht, wobei die Richtung R1 und die Richtung R0 einen Winkel $\alpha$ aus dem Winkelbereich [30° - 60°] einschließen, oder die Abstandshalterschicht zumindest in dem Bereich B aus einem Lochgitter aus einem im Wesentlichen elektrisch nichtleitenden Material M3 mit parallel zur Oberseite verlaufenden Gitterachsen G1, G2 besteht, wobei die Richtung R0 und eine der Gitterachsen G1, G2 einen Winkel $\alpha$ aus dem Winkelbereich [30° - 60°] einschließen und eine auf die Abstandshalterschicht aufgebrachte Messschicht aus einem elektrisch leitenden, elastischen und dehnbaren Material M4.

In einer vorteilhaften Weiterbildung des vorgeschlagenen resistiven und kapazitiven Kraftsensors ist zusätzlich eine Kalibriereinheit vorhanden, die dazu ausgeführt und eingerichtet ist, die erste Kalibrierungskonstante $C_{OFFSET}$ durch Erfassen der Eigenkapazität der zweiten Elektrode E2 über einen ersten Kalibrierungszeitraum $\Delta t_{CAL1}$ und an-schließende Mittelwertbildung zu ermitteln. Während dieses Kalibrierungszeitraums $\Delta t_{CAL1}$ erfolgt kein Krafteintrag auf das Sensorelement. Der erste Kalibrierungszeitraum $\Delta t_{CAL1}$ wird vorteilhaft aus dem Intervall 1 min bis 60 min gewählt und beträgt insbesondere 5 min, 10 min, 20 min, 30 min, 45 min.

In einer vorteilhaften Weiterbildung des vorgeschlagenen resistiven und kapazitiven Kraftsensors ist die Kalibriereinheit dazu ausgeführt und eingerichtet ist, die zweite Kalibrierungskonstante m durch Kalibrierung zu ermitteln, wobei für einen zweiten Kalibrierungszeitraum $\Delta t_{CAL2}$ eine konstante Kraft $|F_0| > 0$ auf das Sensorelement aufgebracht wird, im Kalibrierungszeitraum $\Delta t_{CAL2}$ die elektrische Eigenkapazität C(t) der zweiten Elektrode E2 sowie der elektrische Widerstand R(t) zwischen der ersten Elektrode E1 und einer zweiten Elektrode E2 erfasst werden und anschließend mittels linearer Regression oder hierzu alternativer bekannter mathematischer Verfahren aus den erfassten Werten für C(t) und R(t) die zweite Kalibrierungskonstante m ermittelt wird. Der zweite Kalibrierungszeitraum $\Delta t_{CAL2}$ wird vorteilhaft aus dem Intervall 1 min bis 180 min gewählt und beträgt insbesondere 5 min, 10 min, 20 min, 30 min, 45 min, 60 min, 100 min, 120 min, 150 min.

Die Ermittlung der zweiten Kalibrierungskonstante m

In einer vorteilhaften Weiterbildung des vorgeschlagenen resistiven und kapazitiven Kraftsensors weist die Kalibriereinheit zum Aufbringen der konstanten Kraft $|F_0| > 0$ auf das Sensorelement eine mechanische Vorrichtung auf. Vorteilhaft weist diese mechanische Vorrichtung zumindest einen von der Kalibriereinheit steuerbaren Aktuator auf. Die Vorrichtung ist vorteilhaft derart ausgeführt, dass sie in der Zeit, in der keine Kalibrierung durchgeführt wird, derart (aktiv) positionierbar ist, dass sie die Funktion des Kraftsensors nicht beeinträchtigt.

In einer vorteilhaften Weiterbildung des vorgeschlagenen resistiven und kapazitiven Kraftsensors ist die Kalibriereinheit dazu ausgeführt und eingerichtet, dass die Ermittlung der ersten Kalibrierungskonstante $C_{OFFSET}$ nur dann durchgeführt wird, wenn der elektrische Widerstand R(t) zwischen der ersten Elektrode E1 und der zweiten Elektrode E2 im gesamten ersten Kalibrierungszeitraum $\Delta t_{CAL1}$ gleichbleibend, im Wesentlichen unendlich ist (d.h. es besteht während der Kalibrierung kein elektrischer Kontakt zwischen der ersten Elektrode E1 und der zweiten Elektrode E2). Dadurch kann sichergestellt werden, dass die Ermittlung der ersten Kalibrierungskonstante $C_{OFFSET}$ nur dann durchgeführt wird, wenn keine oder nur eine vernachlässigbar geringe externe Kraft auf das Sensorelement aufgebracht wird.

In einer vorteilhaften Weiterbildung des vorgeschlagenen resistiven und kapazitiven Kraftsensors ist auf dem Sensorelement eine dritte Elektrode E3 zur kapazitiven Abstandsmessung zwischen einem Objekt und dem Sensorelement vorhanden. Die dritte Elektrode E3 kann die Elektroden E1 und E2 zumindest teilweise umschließen. In dieser Weiterbildung ist die Auswerteeinheit dazu ausgeführt und eingerichtet, die Ermittlung der ersten Kalibrierungskonstante $C_{OFFSET}$ nur dann durchzuführen, wenn die Kapazität der dritten Elektrode E3 kleiner als ein vorgegebener Grenzwert ist, wobei der Grenzwert eine Kapazität und damit einen Abstand repräsentiert, bei der das Objekt keinen mechanischen Kontakt mit dem Sensorelement hat. Dadurch kann sichergestellt werden, dass die Ermittlung der ersten Kalibrierungskonstante $C_{OFFSET}$ nur dann durchgeführt wird, wenn ein Objekt sich nicht näher dem Sensorelement nähert, als dem Kapazitäts-Grenzwert entspricht und somit auf das Sensorelement keine externe Kraft wirkt.

Der vorgeschlagene resistive und kapazitive Kraftsensor verfügt über eine effektive und stabile Drift-Kompensation mit einem sehr kleinen Drift-Fehler bei statischen Krafteinträgen. Dies ermöglicht eine höhere Messgenauigkeit und erlaubt die Definition von sehr schmalen Kraftbändern im Messbereich des resistiven und kapazitiven Kraftsensors.

Ein weiterer Aspekt der Erfindung betrifft ein Verfahren zum Betrieb eines resistiven und kapazitiven Kraftsensors, wie vorstehend beschrieben, der zumindest ein Sensorelement mit zumindest einer ersten Elektrode E1 und einer zweiten Elektrode E2 aufweist, wobei das Sensorelement derart ausgeführt ist, dass sich bei Aufbringen einer externen Kraft $F$ abhängig von dem Betrag $|F|$ der Kraft $F$ die elektrische Eigenkapazität $C$ der Elektroden E1 und/oder E2 und der elektrische Widerstand R zwischen der ersten Elektrode E1 und einer zweiten Elektrode E2 ändert. Das vorgeschlagene Verfahren umfasst folgende Schritte.

In einem ersten Schritt erfolgt mit einer ersten Messeinheit, die mit der ersten Elektrode E1 und der zweiten Elektrode E2 elektrisch verbunden ist, ein Ermitteln der elektrischen Eigenkapazität C(t) der Elektrode E2.

In einem zweiten Schritt erfolgt mit einer zweiten Messeinheit, die mit der ersten Elektrode E1 und der zweiten Elektrode E2 elektrisch verbunden ist, ein Ermitteln des elektrischen Widerstandes R(t) zwischen der ersten Elektrode E1 und der zweiten Elektrode E2.

In einem dritten Schritt erfolgt mit einer Auswerteeinheit ein Ermitteln des Betrages $|F(t)|$ einer extern auf das Sensorelement aufgebrachten Kraft F(t) abhängig von einem Mittelwert (mean(C[t - $\Delta$t, t]) der ermittelten zeitabhängigen Eigenkapazität C(t) in einem Zeitintervall [t-$\Delta$t, t] und abhängig von einem Mittelwert mean(R[t -$\Delta$t, t]) des ermittelten zeitabhängigen Widerstands R(t) im Zeitintervall [t-$\Delta$t, t]:

$$(1) \qquad |F(t)| = |F(mean(C[t - \Delta t, t], mean(R[t - \Delta t, t]))|$$

mit $\Delta$t: Zeitspanne und t: Zeit.

In einem vierten Schritt erfolgt ein Ausgeben und/oder Anzeigen des ermittelten Kraftbetrages $|F(t)|$.

Eine vorteilhafte Weiterbildung des vorgeschlagenen Verfahrens zeichnet sich dadurch auch aus, dass die Auswerteeinheit den Betrag $|F(t)|$ der externen Kraft F(t) wie folgt ermittelt:

$$(2) \qquad |F(t)| = C_{OFFSET} - (mean(C[t - \Delta t:t]) - m \cdot mean(R[t - \Delta t:t]))$$

mit:

$C_{OFFSET}$:       erste Kalibrierungskonstante
mean(C[t - $\Delta$t, t])     Mittelwert der zeitabhängigen Eigenkapazität C(t) im Zeitintervall [t-$\Delta$t, t]
mean(R[t -$\Delta$t, t])     Mittelwert des zeitabhängigen Widerstands R(t) im Zeitintervall [t-$\Delta$t, t]
m:       zweite Kalibrierungskonstante.

Eine vorteilhafte Weiterbildung des vorgeschlagenen Verfahrens zeichnet sich dadurch auch aus, dass die Auswerteeinheit die Mittelwerte: mean(C[t - $\Delta$t, t]) und mean(R[t -$\Delta$t, t]) jeweils als arithmetische Mittelwerte bestimmt.

Eine vorteilhafte Weiterbildung des vorgeschlagenen Verfahrens zeichnet sich dadurch auch aus, dass die erste Messeinheit zur Ermittlung der elektrischen Eigenkapazität C(t) der Elektrode E2 ein Ladungs-Transfer-Acquisitions-Verfahren nutzt.

Eine vorteilhafte Weiterbildung des vorgeschlagenen Verfahrens zeichnet sich dadurch auch aus, dass das Sensorelement zusätzlich eine Kalibriereinheit aufweist, wobei die Kalibriereinheit die erste Kalibrierungskonstante $C_{OFFSET}$ durch Erfassen der Eigenkapazität C(t) der zweiten Elektrode E2 ohne externen Krafteintrag auf das Sensorelement über einen ersten Kalibrierungszeitraum $\Delta t_{CAL1}$ und anschließende Mittelwertbildung ermittelt.

Eine vorteilhafte Weiterbildung des vorgeschlagenen Verfahrens zeichnet sich dadurch aus, dass die Kalibriereinheit die zweite Kalibrierungskonstante m durch Kalibrierung ermittelt, wobei für einen zweiten Kalibrierungszeitraum $\Delta t_{CAL2}$ eine konstante Kraft $|F_0| > 0$ auf das Sensorelement aufgebracht wird, im Kalibrierungszeitraum $\Delta t_{CAL2}$ die elektrische Eigenkapazität C(t) der zweiten Elektrode E2 sowie der elektrische Widerstand R(t) zwischen der ersten Elektrode E1 und einer zweiten Elektrode E2 erfasst werden und anschließend mittels linearer Regression oder einem gleichwertigen mathematischen Verfahren aus den erfassten Werten für C(t) und R(t) die zweite Kalibrierungskonstante m ermittelt wird.

Eine vorteilhafte Weiterbildung des vorgeschlagenen Verfahrens zeichnet sich dadurch aus, dass die Kalibriereinheit dazu ausgeführt und eingerichtet ist, dass das Ermitteln der ersten Kalibrierungskonstante $C_{OFFSET}$ nur dann durchführt wird, wenn der elektrische Widerstand R(t) zwischen der ersten Elektrode E1 und der zweiten Elektrode E2 im gesamten ersten Kalibrierungszeitraum $\Delta t_{CAL1}$ gleichbleibend im Wesentlichen unendlich ist.

Eine vorteilhafte Weiterbildung des vorgeschlagenen Verfahrens zeichnet sich dadurch aus, dass auf dem Sensorelement eine dritte Elektrode E3 zur kapazitiven Abstandsmessung zwischen einem Objekt und dem Sensorelement vorhanden ist und die Auswerteeinheit das Ermitteln der ersten Kalibrierungskonstante $C_{OFFSET}$ nur dann durchführt, wenn die Kapazität der dritten Elektrode E3 kleiner als ein vorgegebener Grenzwert ist, wobei der Grenzwert eine Kapazität repräsentiert, bei der das Objekt keinen mechanischen Kontakt mit dem Sensorelement hat.

Eine vorteilhafte Weiterbildung des vorgeschlagenen Verfahrens zeichnet sich dadurch auch aus, dass ein Ermitteln von $C_{OFFSET}$ und/oder m jeweils bei Inbetriebnahme des resistiven und kapazitiven Kraftsensors automatisch erfolgt.

Vorteile und vorteilhafte Weiterbildungen des vorgeschlagenen Verfahrens ergeben sich durch sinngemäße und analoge Übertragung der im Zusammenhang mit dem vorgeschlagenen Kraftsensor gemachten vorstehenden Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1    ein Kraft-Zeit-Diagramm zur Darstellung des Zeitverlaufs einer auf einen Kraftsensor extern aufgebrachten Kraft F(t)

Fig. 2    ein Kapazitäts-Zeit-Diagramm zur Darstellung des Zeitverlaufs einer gemessenen elektrischen Kapazität C(t) eines kapazitiven Kraftsensors bei Einbringung einer externen Kraft gemäß Fig. 1

Fig. 3    ein Widerstands-Zeit-Diagramm zur Darstellung des Zeitverlaufs eines gemessenen elektr. Widerstandes R(t) eines resistiven Kraftsensors bei Einbringung einer externen Kraft gemäß Fig. 1

Fig. 4    R(t) versus C(t) - Diagramm basierend auf den Messwerten der Fig. 2 und Fig. 3

Fig. 5    Drift für R(t), C(t) und |F(t)| für einen konstanten Krafteintrag von $|F_0|$ = 5 N auf das Sensorelement 100 eines erfindungsgemäßen resistiven und kapazitiven Kraftsensors über einen Zeitraum von 10 h

Fig. 6    stark schematisierte Darstellung eines Ausführungsbeispiels des vorgeschlagenen resistiven und kapazitiven Kraftsensors

Fig. 7    stark schematisierte Darstellung eines Ausführungsbeispiels eines Verfahrens zum Betrieb eines vorgeschlagenen resistiven und kapazitiven Kraftsensors

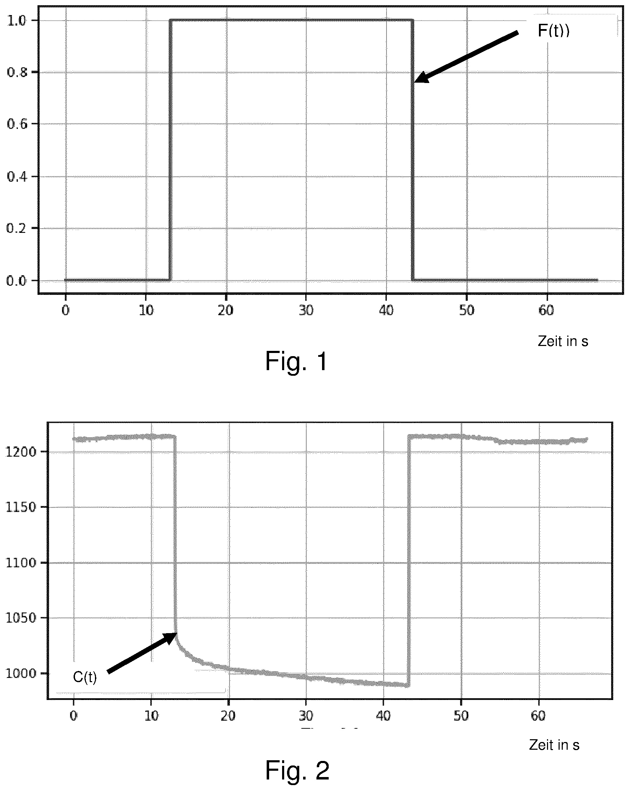

**Fig. 1** zeigt ein Kraft-Zeit-Diagramm zur Darstellung des Zeitverlaufs einer auf einen Kraftsensor extern aufgebrachten Kraft F(t). Dargestellt ist entlang der x-Achse die Zeit t in Sekunden und entlang der y-Achse eine normierte Krafteinheit. Der Krafteintrag erfolgt beginnend bei Sekunde 13 und endet bei Sekunde 43. In diesem Zeitintervall wird die mechanische Kraft F(t) = 1.0 (in normierten Einheiten) extern auf den Kraftsensor, wie dem hier beschriebenen, aufgebracht.

**Fig. 2** zeigt ein Kapazitäts-Zeit-Diagramm zur Darstellung des Zeitverlaufs einer gemessenen elektrischen Kapazität C(t), insbesondere der Eigenkapazität eines kapazitiven Kraftsensors (wie dem hier vorgeschlagenen resistiven und kapazitiven Kraftsensor) bei Einbringung einer externen Kraft gemäß Fig. 1. Dargestellt ist entlang der x-Achse die Zeit t in Sekunden und entlang der y-Achse eine die Kapazität C(t) angebende Einheit in Counts.

Deutlich zu erkennen ist, dass die gemessene Kapazität C(t) des kapazitiven Kraftsensors mit Beginn des mechanischen Krafteintrages ab Sekunde 13 von ca.1220 Einheiten zunächst quasi spontan auf ca. 1030 Einheiten verringert, allerdings anschließend bis Sekunde 43 weiter kontinuierlich auf ca. 990 Einheiten abfällt, obwohl die extern aufgebrachte Kraft in diesem Zeitraum unverändert bleibt.

Eine derartige Messwert-Drift ist grundsätzlich auch bei resistiven Kraftsensoren zu finden.

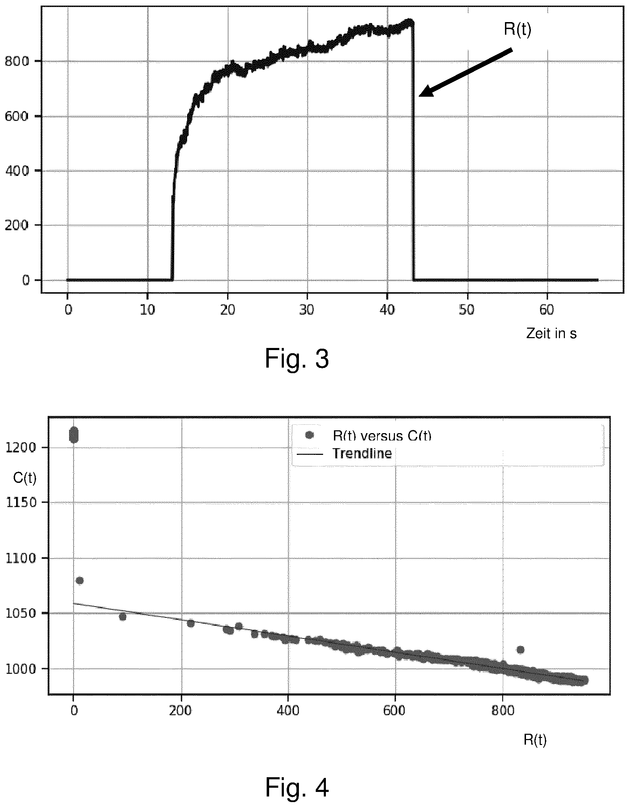

**Fig. 3** zeigt ein Widerstands-Zeit-Diagramm zur Darstellung des Zeitverlaufs eines gemessenen elektrische Widerstandes R(t) eines resistiven Kraftsensors (wie dem hier vorgeschlagenen resistiven und kapazitiven Kraftsensor) bei Einbringung einer externen Kraft gemäß Fig. 1. Dargestellt ist entlang der x-Achse die Zeit t in Sekunden und entlang der y-Achse eine den elektrischen Widerstand R(t) bspw. zwischen zwei Elektroden angebende Einheit in Counts.

Deutlich zu erkennen ist, dass der gemessene Widerstand R(t) des resistiven Kraftsensors mit Beginn des mechanischen Krafteintrages ab Sekunde 13 von 0 Einheiten zunächst quasi spontan auf ca. 300 Einheiten steigt, allerdings anschließend bis Sekunde 43 weiter kontinuierlich auf ca. 900 Einheiten ansteigt, obwohl die extern aufgebrachte Kraft in diesem Zeitraum unverändert bleibt.

Aus den Figuren 2 und 3 ergibt sich damit ein für kapazitive und resistive Kraftsensoren typisches Driftverhalten der ermittelten Messwerte bei Aufbringen einer konstanten mechanischen Kraft.

**Fig. 4** zeigt ein R(t) versus C(t) - Diagramm basierend auf den Messwerten der Fig. 2 und Fig. 3 und damit einen Zusammenhang der jeweiligen Driftverhalten für R(t) und C(t). Deutlich erkennbar ist, dass das Driftverhalten von R(t) versus C(t) linear gut approximierbar ist.

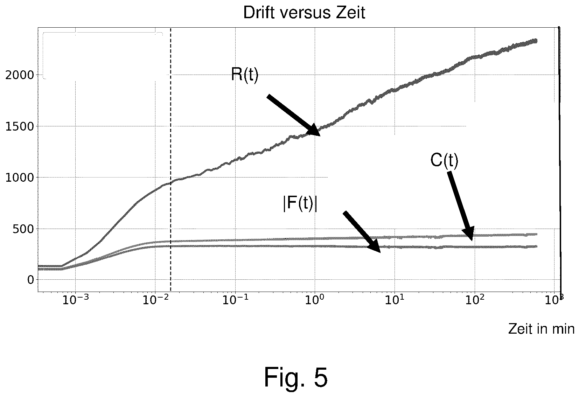

**Fig. 5** zeigt eine Drift für R(t), C(t) und |F(t)| für einen konstanten Krafteintrag von $|F_0|$ = 5 N ab einer Zeit kurz vor $10^{-3}$ min auf das Sensorelement 100 eines erfindungsgemäßen resistiven und kapazitiven Kraftsensors über einen Zeitraum von ca. 10 h. Dargestellt ist entlang der x-Achse die Zeit t in Minuten und entlang der y-Achse eine normierte Einheit für R(t), C(t) und |F(t)|.

Die Kurven für R(t) und C(t) zeigen den Zeitverlauf der entsprechenden Messwerte und damit die jeweilige Messwertdrift. Die Kurve |F(t)| zeigt den nach Gleichung (2) aus den Messwerten für R(t) und C(t) ermittelten Betrag |F(t)| der Kraft F(t). Deutlich zu erkennen ist, dass die mit einem erfindungsgemäßen Sensor ermittelten Messwerte der Kraft F(t) nur noch eine sehr geringe Drift aufweisen und somit ein erfindungsgemäßer Kraftsensor erheblich stabilere und genauere Messwerte liefert, als bisher bekannte gattungsgemäße Kraftsensoren. So kann bspw. die Messwertdrift verglichen mit dem resistiven Ursprungssignal R(t) um 99 % verringert werden.

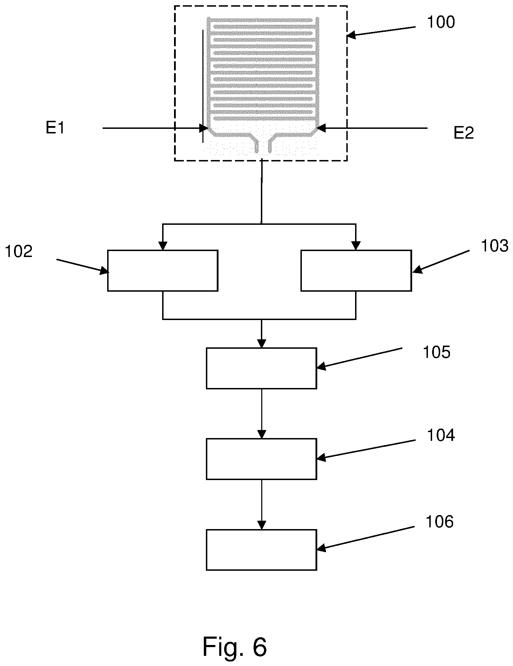

**Fig. 6** zeigt eine stark schematisierte Darstellung eines Ausführungsbeispiels des vorgeschlagenen resistiven und kapazitiven Kraftsensors umfassend zumindest ein Sensorelement **100** mit zumindest einer ersten Elektrode E1 und einer zweiten Elektrode E2, wobei das Sensorelement **100** derart ausgeführt ist, dass sich bei Aufbringen einer externen Kraft F abhängig von dem Betrag |F| der Kraft F die elektrische Eigenkapazität C der Elektroden E1 und/oder E2 und der elektrische Widerstand R zwischen der ersten Elektrode E1 und einer zweiten Elektrode E2 ändert, einer ersten Messeinheit **102,** die mit der ersten Elektrode E1 und der zweiten Elektrode E2 elektrisch verbunden ist, und die zur Ermittlung der elektrischen Eigenkapazität C(t) der Elektrode E2 ausgeführt und eingerichtet ist, einer zweiten Messeinheit **103,** die mit der ersten Elektrode E1 und der zweiten Elektrode E2 elektrisch verbunden ist, und die zur Ermittlung des elektrischen Widerstandes R(t) zwischen der ersten Elektrode E1 und einer zweiten Elektrode E2 ausgeführt und eingerichtet ist, eine Auswerteeinheit **104,** die dazu ausgeführt und eingerichtet ist, den Betrag |F(t)| einer extern auf das Sensorelement **100** aufgebrachten Kraft F(t) abhängig von einem Mittelwert (mean(C[t - Δt, t]) der ermittelten zeitabhängigen Eigenkapazität C(t) in einem Zeitintervall [t-Δt, t] und abhängig von einem Mittelwert mean(R[t - Δt, t]) des ermittelten zeitabhängigen Widerstands R(t) im Zeitintervall [t-Δt, t]: |F(t)| = |F(mean(C[t - Δt, t], mean(R[t -Δt, t]))|, mit Δt: Zeitspanne und t: Zeit, und eine Ausgabeeinheit **106** zur Ausgabe und/oder Anzeige des ermittelten Kraftbetrages |F(t)|.

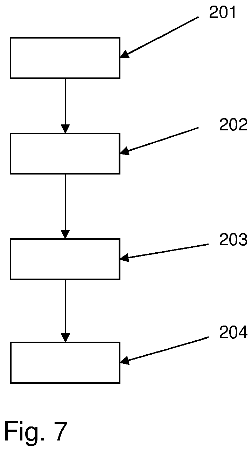

**Fig. 7** zeigt eine stark schematisierte Darstellung eines Ausführungsbeispiels eines Verfahrens zum Betrieb eines vorgeschlagenen resistiven und kapazitiven Kraftsensors der zumindest ein Sensorelement 100 mit zumindest einer ersten Elektrode E1 und einer zweiten Elektrode E2 aufweist, wobei das Sensorelement 100 derart ausgeführt ist, dass sich bei Aufbringen einer externen Kraft F abhängig von dem Betrag |F| der Kraft F die elektrische Eigenkapazität C der Elektroden E1 und/oder E2 und der elektrische Widerstand R zwischen der ersten Elektrode E1 und einer zweiten Elektrode E2 ändert. Das Verfahren umfasst folgende Schritte.

In einem Schritt **201** erfolgt mit einer ersten Messeinheit 102, die mit der ersten Elektrode E1 und der zweiten Elektrode E2 elektrisch verbunden ist, ein Ermitteln der elektrischen Eigenkapazität C(t) der Elektrode E2. In einem Schritt **202** erfolgt mit einer zweiten Messeinheit 103, die mit der ersten Elektrode E1 und der zweiten Elektrode E2 elektrisch verbunden ist, ein Ermitteln des elektrischen Widerstandes R(t) zwischen der ersten Elektrode E1 und der zweiten Elektrode E2. In einem Schritt **203** erfolgt mit einer Auswerteeinheit 104 ein Ermitteln des Betrages |F(t)| einer extern auf das Sensorelement (100) aufgebrachten Kraft F(t) abhängig von einem Mittelwert (mean(C[t - Δt, t]) der ermittelten zeitabhängigen Eigenkapazität C(t) in einem Zeitintervall [t-Δt, t] und abhängig von einem Mittelwert mean(R[t -Δt, t]) des ermittelten zeitabhängigen Widerstands R(t) im Zeitintervall [t-Δt, t] ]: |F(t)| = |F(mean(C[t - Δt, t], mean(R[t - Δt, t]), $C_{OFFSET}$)|, mit Δt: Zeitspanne und t: Zeit. In einem Schritt **204** erfolgt ein Ausgeben und/oder Anzeigen des ermittelten Kraftbetrages |F(t)|.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die Ansprüche definiert wird. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

Bezugszeichenliste

| | |
|---|---|
| 100 | Sensorelement |
| 102 | erste Messeinheit |
| 103 | zweite Messeinheit |
| 104 | Auswerteeinheit |
| 105 | Kalibriereinheit |
| 106 | Ausgabeeinheit |
| 201-204 | Verfahrensschritte |

**Patentansprüche**

**1.** Resistiver und kapazitiver Kraftsensor, umfassend

- zumindest ein Sensorelement (100) mit zumindest einer ersten Elektrode E1 und einer zweiten Elektrode E2, wobei das Sensorelement (100) derart ausgeführt ist, dass sich bei Aufbringen einer externen Kraft $F$ abhängig von dem Betrag $|F|$ der Kraft $F$ die elektrische Eigenkapazität $C$ der Elektroden E1 und/oder E2 und der elektrische Widerstand $R$ zwischen der ersten Elektrode E1 und einer zweiten Elektrode E2 ändert,
- einer ersten Messeinheit (102), die mit der ersten Elektrode E1 und der zweiten Elektrode E2 elektrisch verbunden ist, und die zur Ermittlung der elektrischen Eigenkapazität C(t) der Elektrode E2 ausgeführt und eingerichtet ist,
- einer zweiten Messeinheit (103), die mit der ersten Elektrode E1 und der zweiten Elektrode E2 elektrisch verbunden ist, und die zur Ermittlung des elektrischen Widerstandes R(t) zwischen der ersten Elektrode E1 und einer zweiten Elektrode E2 ausgeführt und eingerichtet ist,
- eine Auswerteeinheit (104), die dazu ausgeführt und eingerichtet ist, den Betrag $|F(t)|$ einer extern auf das Sensorelement (100) aufgebrachten Kraft F(t) abhängig von einem Mittelwert (mean(C[t - $\Delta$t, t]) der ermittelten zeitabhängigen Eigenkapazität C(t) in einem Zeitintervall [t-$\Delta$t, t] und abhängig von einem Mittelwert mean(R[t -$\Delta$t, t]) des ermittelten zeitabhängigen Widerstands R(t) im Zeitintervall [t-$\Delta$t, t]:

$$(1) \qquad |F(t)| = |F(\text{mean}(C[t - \Delta t, t], \text{mean}(R[t - \Delta t, t]))|,$$

mit $\Delta$t: Zeitspanne und t: Zeit zu ermitteln, und
- eine Ausgabeeinheit (106) zur Ausgabe und/oder Anzeige des ermittelten Kraftbetrages $|F(t)|$.

**2.** Resistiver und kapazitiver Kraftsensor nach Anspruch 1, bei dem die Auswerteeinheit (104) den Betrag $|F(t)|$ der externen Kraft F(t) wie folgt ermittelt:

$$(2) \qquad |F(t)| = C_{OFFSET} - (\text{mean}(C[t - \Delta t:t]) - m \cdot \text{mean}(R[t - \Delta t:t]))$$

mit:

$C_{OFFSET}$: erste Kalibrierungskonstante
mean(C[t - $\Delta$t:t]) Mittelwert der zeitabhängigen Eigenkapazität C(t) im Zeitintervall [t-$\Delta$t, t]
mean(R[t -$\Delta$t:t]) Mittelwert des zeitabhängigen Widerstands R(t) im Zeitintervall [t-$\Delta$t, t]
m: zweite Kalibrierungskonstante

**3.** Resistiver und kapazitiver Kraftsensor nach einem der Ansprüche 1 bis 2, wobei das Sensorelement (100) aufweist:

- eine Substratschicht aus einem elektrisch nichtleitenden Material M1,
- eine auf einer Oberseite der Substratschicht aufgebrachte erste Elektrodenschicht ES1 als erste Elektrode E1 und eine auf die Oberseite der Substratschicht aufgebrachte zweite Elektrodenschicht ES2 als Elektrode E2, wobei die erste und die zweite Elektrodenschicht ES1, ES2 aus einem elektrisch leitenden Material M2 bestehen, auf der Oberseite lateral voneinander beabstandet angeordnet sind und jeweils eine 2D-Form aufweisen, die derart gestaltet ist, dass sich Teilbereiche der Elektrodenschicht ES1 und Teilbereiche der Elektrodenschicht ES2 zumindest in einem Bereich B an der Oberseite entlang einer Richtung R0 aufeinanderfolgend mehrfach abwechseln,

- eine auf die Substratschicht in Zwischenräumen zwischen den Elektrodenschichten ES1 und ES2 und diese im Ruhezustand überragend und/oder jeweils auf die Elektrodenschichten ES1 und ES2 vereinzelt aufgebrachte Abstandshalter aus einem im Wesentlichen elektrisch nichtleitenden Material M3, und

- eine auf die Abstandshalterschicht aufgebrachte Messschicht aus einem elektrisch leitenden, elastischen und dehnbaren Material M4.

4. Resistiver und kapazitiver Kraftsensor nach einem der Ansprüche 1 bis 3, zusätzlich aufweisend eine Kalibriereinheit (105), die dazu ausgeführt und eingerichtet ist, die erste Kalibrierungskonstante $C_{OFFSET}$ durch Erfassen der Eigenkapazität C(t) der zweiten Elektrode E2 ohne externen Krafteintrag auf das Sensorelement (100) über einen ersten Kalibrierungszeitraum $\Delta t_{CAL1}$ und anschließende Mittelwertbildung der in $\Delta t_{CAL1}$ erfassten Eigenkapazität C(t) zu ermitteln.

5. Resistiver und kapazitiver Kraftsensor nach Anspruch 4,
wobei die Kalibriereinheit (105) dazu ausgeführt und eingerichtet ist, die zweite Kalibrierungskonstante m durch Kalibrierung zu ermitteln, wobei für einen zweiten Kalibrierungszeitraum $\Delta t_{CAL2}$ eine konstante Kraft $|F_0| > 0$ auf das Sensorelement (100) aufgebracht wird, im Kalibrierungszeitraum $\Delta t_{CAL2}$ die elektrische Eigenkapazität C(t) der zweiten Elektrode E2 sowie der elektrische Widerstand R(t) zwischen der ersten Elektrode E1 und einer zweiten Elektrode E2 erfasst werden und anschließend mittels linearer Regression aus den erfassten Werten für C(t) und R(t) die zweite Kalibrierungskonstante m ermittelt wird.

6. Resistiver und kapazitiver Kraftsensor nach Anspruch 5,
wobei die Kalibriereinheit (105) zum Aufbringen der konstanten Kraft $|F_0| > 0$ auf das Sensorelement (100) eine mechanische Vorrichtung aufweist.

7. Resistiver und kapazitiver Kraftsensor nach einem der Ansprüche 4 bis 6, wobei die Kalibriereinheit (105) dazu ausgeführt und eingerichtet ist, die Ermittlung der ersten Kalibrierungskonstante $C_{OFFSET}$ nur dann durchzuführen, wenn der elektrische Widerstand R(t) zwischen der ersten Elektrode E1 und der zweiten Elektrode E2 im gesamten ersten Kalibrierungszeitraum $\Delta t_{CAL1}$ gleichbleibend, im Wesentlichen unendlich ist.

8. Resistiver und kapazitiver Kraftsensor nach einem der Ansprüche 1 bis 7, wobei auf dem Sensorelement (100) eine dritte Elektrode E3 zur kapazitiven Abstandsmessung zwischen einem Objekt und dem Sensorelement (100) vorhanden ist, und die Auswerteeinheit (104) dazu ausgeführt und eingerichtet ist, die Ermittlung der ersten Kalibrierungskonstante $C_{OFFSET}$ nur dann durchzuführen, wenn die Kapazität der dritten Elektrode E3 kleiner als ein vorgegebener Grenzwert ist, wobei der Grenzwert eine Kapazität repräsentiert, bei der das Objekt keinen mechanischen Kontakt mit dem Sensorelement (100) hat.

9. Verfahren zu Betrieb eines resistiven und kapazitiven Kraftsensors gemäß einem der Ansprüche 1 bis 8, der zumindest ein Sensorelement (100) mit zumindest einer ersten Elektrode E1 und einer zweiten Elektrode E2 aufweist, wobei das Sensorelement (100) derart ausgeführt ist, dass sich bei Aufbringen einer externen Kraft $F$ abhängig von dem Betrag $|F|$ der Kraft $F$ die elektrische Eigenkapazität $C$ der Elektroden E1 und/oder E2 und der elektrische Widerstand $R$ zwischen der ersten Elektrode E1 und einer zweiten Elektrode E2 ändert, mit den Schritten:

- mit einer ersten Messeinheit (102), die mit der ersten Elektrode E1 und der zweiten Elektrode E2 elektrisch verbunden ist, Ermitteln (201) der elektrischen Eigenkapazität C(t) der Elektrode E2,
- mit einer zweiten Messeinheit (103), die mit der ersten Elektrode E1 und der zweiten Elektrode E2 elektrisch verbunden ist, Ermitteln (202) des elektrischen Widerstandes R(t) zwischen der ersten Elektrode E1 und der zweiten Elektrode E2,
- mit einer Auswerteeinheit (104) Ermitteln (203) des Betrages $|F(t)|$ einer extern auf das Sensorelement (100) aufgebrachten Kraft F(t) abhängig von einem Mittelwert (mean(C[t - $\Delta t$, t]) der ermittelten zeitabhängigen Eigenkapazität C(t) in einem Zeitintervall [t-$\Delta t$, t] und abhängig von einem Mittelwert mean(R[t -$\Delta t$, t]) des ermittelten zeitabhängigen Widerstands R(t) im Zeitintervall [t-$\Delta t$, t] ]:

$$(1) \quad |F(t)| = |F(\text{mean}(C[t - \Delta t, t], \text{mean}(R[t - \Delta t, t]), C_{OFFSET})|,$$

mit Δt: Zeitspanne und t: Zeit, und
- Ausgeben und/oder Anzeigen (204) des ermittelten Kraftbetrages |F(t)|.

10. Verfahren nach Anspruch 9,
bei dem ein Ermitteln von $C_{OFFSET}$ und/oder m jeweils bei Inbetriebnahme des resistiven und kapazitiven Kraftsensors automatisch erfolgt.

**Claims**

1. Resistive and capacitive force sensor, comprising:

    - at least one sensor element (100) having at least a first electrode E1 and a second electrode E2, wherein the sensor element (100) is designed in such manner that when an external force F is applied, an intrinsic electrical capacitance C of the electrode(s) E1 and/or E2 and the electrical resistance $R$ between the first electrode E1 and a second electrode E2 change as a function of a magnitude $|F|$ of the force $F$;
    - a first measuring unit (102) which is electrically connected to the first electrode E1 and the second electrode E2, and which is designed and configured to determine the intrinsic electrical capacitance C(t) of the electrode E2,
    - a second measuring unit (103) which is electrically connected to the first electrode E1 and the second electrode E2, and which is designed and configured to determine the electrical resistance R(t) between the first electrode E1 and a second electrode E2,
    - an evaluation unit (104) which is designed and configured to determine the magnitude |F(t)| of a force F(t) applied to the outside of the sensor element (100) as a function of a mean value (mean(C[t-Δt, t]) of the determined time-dependent intrinsic capacitance C(t) in a time interval [t-Δt, t] and as a function of a mean value mean(R[t-Δt, t]) of the determined time-dependent resistance R(t) in the time interval [t-Δt, t]:

    $$|F(t)| = C_{OFFSET}\text{-}(\text{mean}(C[t-\Delta t, t]), m\cdot\text{mean}(R[t-\Delta t])) \tag{2}$$

    where Δt: time period, and t: time for determination; and
    - an output unit (106) to output and/or display the determined magnitude of the force |F(t)|.

2. Resistive and capacitive force sensor according to Claim 1, in which the evaluation unit (104) determines the magnitude |F(t)| of the external force F(t) as follows:

    $$(2) \quad |F(t)| = C_{OFFSET}\text{-}(\text{mean}(C[t-\Delta t:t])-m\cdot\text{mean}(R[t-\Delta t:t]))$$

    where:

    $C_{OFFSET}$: first calibration constant
    mean(C[t-Δt:t]) mean value of the time-dependent intrinsic capacitance C(t) in the time interval [t-Δt, t],
    mean(R[t-Δt:t]) mean value of the time-dependent resistance R(t) in the time interval [t-Δt, t],
    m: second calibration constant.

3. Resistive and capacitive force sensor according to any of Claims 1 to 2, wherein the sensor element (100) has:

    - a substrate layer of an electrically non-conductive material M1,
    - a first electrode layer ES1 applied to an upper side of the substrate layer as the first electrode E1, and a second electrode layer ES2 applied to the upper side of the substrate layer as the second electrode E2, wherein the first and the second electrode layers ES1, ES2 consist of an electrically conductive material M2, are arranged laterally spaced apart from one another on the upper side and each have a 2D shape which is designed in such manner that partial regions of the first electrode layer ES1 and partial regions of the second electrode layer ES2 alternate successively a number of times along a direction R0 at least in a region B on the upper side,
    - a spacer layer of a substantially electrically non-conductive material M3 applied singly to the substrate layer in spaces between the electrode layers ES1 and ES2 and projecting beyond them in a resting state, and/or applied singly to each of the electrode layers ES1 and ES2, and
    - a measuring layer of an electrically conductive, elastic, and stretchable material M4 applied to the spacer layer.

4. Resistive and capacitive force sensor according to any one of Claims 1 to 3, also including a calibration unit (105) that is designed and configured to determine the first calibration constant $C_{OFFSET}$ by detecting the intrinsic capacitance C(t) of the second electrode E2 without application of external force to the sensor element (100) over a first calibration period $\Delta t_{CAL1}$ and subsequently averaging the intrinsic capacitance C(t) detected in $\Delta t_{CAL1}$.

5. Resistive and capacitive force sensor according to Claim 4, wherein the calibration unit (105) is designed and configured to determine the second calibration constant m by calibration, wherein a constant force $|F_0| > 0$ is applied to the sensor element (100) for a second calibration period $\Delta t_{CAL2}$, the intrinsic electrical capacitance C(t) of the second electrode E2 and the electrical resistance R(t) between the first electrode E1 and a second electrode E2 are recorded, and the second calibration constant m is then determined from the recorded values for C(t) and R(t) via linear regression.

6. Resistive and capacitive force sensor according to Claim 5, wherein the calibration unit (105) includes a mechanical apparatus for applying the constant force $||F_0| > 0$ to the sensor element (100).

7. Resistive and capacitive force sensor according to any one of Claims 4 to 6, wherein the calibration unit (105) is designed and configured to perform the determination of the first calibration constant $C_{OFFSET}$ only if the electrical resistance R(t) between the first electrode E1 and the second electrode E2 is constant, substantially infinite, throughout the first calibration period $\Delta t_{CAL1}$.

8. Resistive and capacitive force sensor according to any one of Claims 1 to 7, wherein a third electrode E3 for capacitive distance measurement between an object and the sensor element (100) is present on the sensor element (100), and wherein the evaluation unit (104) is designed and configured to perform the determination of the first calibration constant $C_{OFFSET}$ only if the capacitance of the third electrode E3 is smaller than a predetermined limit value, wherein the limit value represents a capacitance at which the object has no mechanical contact with the sensor element (100) .

9. Method for operating a resistive and capacitive force sensor according to any one of Claims 1 to 8, including at least a sensor element (100) having at least a first electrode E1 and a second electrode E2, wherein the sensor element (100) is designed in such manner that when an external force *F* is applied, the intrinsic electrical capacitance *C* of the electrode(s) E1 and/or E2 and the electrical resistance R between the first electrode E1 and a second electrode E2 change as a function of a magnitude |*F*| of the force *F*, with the steps:

   - determining (201) the electrical capacitance C(t) of the electrode E2 with a first measuring unit (102) which is electrically connected to the first electrode E1 and the second electrode E2;
   - determining (202) the electrical resistance R(t) between the first electrode E1 and the second electrode E2 with a second measuring unit (103) which is electrically connected to the first electrode E1 and the second electrode E2;
   - with an evaluation unit (104), determining (203) the magnitude |F(t)| of a force F(t) applied externally to the sensor element (100) as a function of a mean value (mean(C[t - $\Delta t$, t]) of the determined time-dependent intrinsic capacitance C(t) in a time interval [t-$\Delta t$, t] and as a function of the mean value mean(R[t-$\Delta t$, t]) of the determined time-dependent resistance R(t) in the time interval [t-$\Delta t$, t]:

   $$|F(t)| = |F(mean(C[t-\Delta t, t]), mean(R[t-\Delta t, t ])\, C_{OFFSET})|, \text{ where } \Delta t: \text{ time period, and } t: \text{ time,}$$
   and
   (1)

    and
   - outputting and/or displaying (204) the determined magnitude |F(t)| of the force.

10. Method according to Claim 9, wherein a determination of $C_{OFFSET}$ and/or m is performed automatically in each case when the resistive and capacitive force sensor is started up.

**Revendications**

1. Capteur de force résistive et capacitive, comprenant :

   - au moins un élément de capteur (100) comportant au moins une première électrode E1 et une deuxième électrode E2, dans lequel l'élément de capteur (100) est conçu de telle sorte que lorsqu'une force externe *F* est appliquée, la capacité propre électrique C des électrodes E1 et/ou E2 varie en fonction de la quantité |*F*| de la force *F* et de la résistance électrique *R* entre la première électrode E1 et une deuxième électrode E2,

- une première unité de mesure (102) qui est connectée électriquement à la première électrode E1 et à la deuxième électrode E2 et qui est conçue et configurée pour déterminer la capacité propre électrique C(t) de l'électrode E2,

- une deuxième unité de mesure (103), qui est connectée électriquement à la première électrode E1 et à la deuxième électrode E2 et qui est conçue et configurée pour déterminer la résistance électrique R(t) entre la première électrode E1 et une deuxième électrode E2,

- une unité d'évaluation (104), qui est conçue et configurée pour déterminer la quantité F(t) d'une force externe F(t) appliquée à l'élément de capteur (100) en fonction d'une valeur moyenne t (mean(C[t - $\Delta$t, t]) de la capacité propre C(t) déterminée en fonction du temps dans un intervalle de temps [t-$\Delta$t, t] et en fonction d'une valeur moyenne mean(R[t -$\Delta$t, t] de la résistance déterminée en fonction du temps R(t) dans l'intervalle de temps [t-$\Delta$t, t] :

$$|F(t)| = |F(mean(C[t - \Delta t, t], mean(R[t - \Delta t, t]))| \tag{1}$$

pour déterminer avec une période de temps : $\Delta$t et un temps : t et
- une unité de sortie (106) pour sortir et/ou afficher la quantité de force déterminée |F(t)| .

2. Capteur de force résistive et capacitive selon la revendication 1, dans lequel l'unité d'évaluation (104) détermine la quantité |F(t)| de force externe F(t) déterminée comme suit :

$$|F(t)| = C_{OFFSET} - mean(C[t - \Delta t:t]) - m\text{-}mean(R[t -\Delta t:t])) \text{ avec:} \tag{2}$$

$C_{OFFSET}$ : première constante d'étalonnage moyenne
mean(C[t - $\Delta$t:t]) : valeur moyenne de la capacité propre C(t) en fonction de l'intervalle de temps [t-$\Delta$t, t]
mean(R[t-$\Delta$t:t]) : valeur moyenne de la résistance R(t) en fonction du temps dans l'intervalle de temps I [t-$\Delta$t, t]
m : deuxième constante d'étalonnage

3. Capteur de force résistive et capacitive selon une des revendications 1 à 2, dans lequel l'élément de capteur (100) présente :

- une couche de substrat constituée d'un matériau M1 électriquement non conducteur,
- une première couche d'électrode appliquée sur une face supérieure de la couche de substrat Couche d'électrode ES1 en tant que première électrode E1 et une deuxième couche d'électrode ES2 appliquée sur la face supérieure de la couche de substrat en tant qu'électrode E2, dans lequel la première et deuxième couche d'électrode ES1, ES2 sont constituées d'un matériau électriquement conducteur M2, sont disposées latéralement à distance de l'une sur l'autre sur le dessus et présentent respectivement une forme 2D, qui est conçue de telle sorte que des zones partielles de la couche d'électrode ES1 et des zones partielles de la couche d'électrode ES2 alternent plusieurs fois au moins dans une zone B sur la face supérieure le long d'une direction R0
- une entretoise appliquée sur la couche de substrat dans les espaces entre les couches d'électrodes ES1 et ES2 et en un matériau sensiblement non conducteur d'électricité M3, qui dépassent à l'état de repos et/ou sont appliquées individuellement sur les couches d'électrodes ES1 et ES2, et
- une couche de mesure en un matériau électriquement conducteur, élastique et extensible M4 appliqué sur la couche d'entretoise.

4. Capteur de force résistive et capacitive selon une des revendications 1 à 3, comprenant en outre une unité d'étalonnage (105), qui est conçue et configurée pour détecter la première constante d'étalonnage $C_{OFFSET}$ en déterminant la capacité propre C(t) de la deuxième électrode E2 sans entrée de force externe sur l'élément de capteur (100) via une première période d'étalonnage $\Delta t_{CAL1}$ et une moyenne ultérieure de la capacité propre C(t) enregistrée dans $\Delta t_{CAL1}$.

5. Capteur de force résistive et capacitive selon la revendication 4, dans lequel l'unité d'étalonnage (105) est conçue et configurée pour déterminer la deuxième constante d'étalonnage m par étalonnage, dans lequel pendant une deuxième période d'étalonnage $\Delta t_{cAL2}$ une force constante |$F_0$| > 0 est appliquée sur l'élément de capteur (100), pendant la période d'étalonnage $At_{CAL2}$, la capacité propre électrique C(t) de la deuxième électrode E2 et la résistance électrique R(t) entre la première électrode E1 et une deuxième électrode E2 sont enregistrées puis en utilisant une régression linéaire à partir des valeurs enregistrées pour C(t) et R(t) la deuxième constante d'étalonnage m est déterminée.

6.  Capteur de force résistive et capacitive selon la revendication 5, dans lequel l'unité d'étalonnage (105) comporte un dispositif mécanique pour appliquer la force constante $|F_0| > 0$ à l'élément de capteur (100) .

7.  Capteur de force résistive et capacitive selon une des revendications 4 à 6, dans lequel l'unité d'étalonnage (105) est conçue et paramétrée pour effectuer la détermination de la première valeur d'étalonnage COFFSET seulement si la résistance électrique R(t) entre la première électrode E1 et la deuxième électrode E2 est restée constante tout au long de la première période d'étalonnage $At_{CAL1}$, est essentiellement infinie.

8.  Capteur de force résistive et capacitive selon une des revendications 1 à 7, dans lequel une troisième électrode E3 pour la mesure capacitive de distance entre un objet et l'élément de capteur (100) est présente sur l'élément de capteur (100), et l'unité d'évaluation (104) est conçue et configurée pour effectuer la détermination de la première constante d'étalonnage COFFSET uniquement si la capacité de la troisième électrode E3 est inférieure à une valeur limite prédéterminée, dans lequel la valeur limite représente une capacité à laquelle l'objet n'a aucun contact mécanique avec l'élément de capteur (100).

9.  Procédé pour faire fonctionner un capteur de force résistive et capacitive selon une des revendications 1 à 8, qui comporte au moins un élément de capteur (100) avec au moins une première électrode E1 et une deuxième électrode E2, dans lequel l'élément de capteur (100) est conçu de telle manière que lorsqu'une force externe $F$ est appliquée, en fonction de la quantité $|F|$ de la force $F$, la capacité électrique propre $C$ des électrodes E1 et/ou E2 et la résistance électrique $R$ entre la première électrode E1 et une deuxième électrode E2 varient, comportant les étapes consistant à :

    - avec une première unité de mesure (102), qui est connectée électriquement à la première électrode E1 et à la deuxième électrode E2, déterminer (201) la capacité propre électrique C(t) de l'électrode E2,
    - avec une deuxième unité de mesure (103), qui est connectée électriquement à la première électrode E1 et à la deuxième électrode E2, déterminer (202) la résistance électrique R(t) entre la première électrode E1 et la deuxième électrode E2,
    - avec une unité d'évaluation (104), déterminer (203) la quantité $|F(t)|$ d'une force F(t) appliquée extérieurement à l'élément de capteur (100) en fonction d'une valeur moyenne (mean(C[t
    - $\Delta$t, t]) de la capacité propre déterminée en fonction du temps C(t) dans un intervalle de temps [t-$\Delta$t, t] et en fonction d'une valeur moyenne (R[t -$\Delta$t, t]) de la résistance déterminée en fonction du temps R(t) dans l'intervalle de temps [t-$\Delta$t, t] ] :

    $|F(t)| = |F(mean(C[t -\Delta t, t], mean(R[t- \Delta t, t]), C_{OFFSET})|$ , avec $\Delta$t : intervalle de temps et
    t : temps, et

    (1)

    - sortir et/ou afficher (204) la quantité déterminée de force $|F(t)|$.

10. Procédé selon la revendication 9, dans lequel $C_{OFFSET}$ et/ou m sont déterminés automatiquement lors de la mise en fonctionnement du capteur de force résistive et capacitive.

Fig. 1

Fig. 2

Fig. 3

Fig. 4

Fig. 5

E1        100

E2

102      103

105

104

106

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015111425 A1
- US 20170261388 A1